# EUROPÄISCHE PATENTSCHRIFT

(11) **EP 0 636 218 B1**
(45) Veröffentlichungstag und Bekanntmachung des Hinweises auf die Patenterteilung: **06.03.1996**
(21) Anmeldenummer: 93907792.1
(22) Anmeldetag: 06.04.1993
(51) Int. Cl.: F16D 65/16, F16D 65/56, F16D 55/224

(54) **DRUCKLUFTBETÄTIGTE SCHEIBENBREMSE**
PNEUMATICALLY OPERATED DISC BRAKE
FREIN A DISQUE A AIR COMPRIME

(30) Priorität: 13.04.1992 DE 4212352
(43) Veröffentlichungstag der Anmeldung: 01.02.1995
(73) Patentinhaber: KNORR-BREMSE SYSTEME FÜR NUTZFAHRZEUGE GmbH, D-80809 München (DE)
(72) Erfinder: BAUMGARTNER, Hans, D-8052 Moosburg (DE); TRIMPE, Robert, D-8000 München 50 (DE)
(74) Vertreter: KUHNEN, WACKER & PARTNER
(86) Internationale Anmeldenummer: DE9300327
(87) Internationale Veröffentlichungsnummer: WO9321454

(56) Entgegenhaltungen:
- EP-A- 0 140 671
- DE-A- 2 635 962
- DE-A- 4 032 885
- DE-A- 4 112 641
- US-A- 4 842 103

## Beschreibung

Die Erfindung bezieht sich auf eine druckluftbetätigte Scheibenbremse gemäß dem Oberbegriff des Anspruchs 1, die insbesondere für Straßemahrzeuge und vorzugsweise für Nutzfahrzeuge vorgesehen ist.

Bei einer bekannten Scheibenbremse nach DE-A-37 16 202 wird eine Bremsscheibe von einem in Axialrichtung verschiebbar gelagerten Bremssattel umfaßt, wobei auf einer Seite des Bremssattels eine Zuspannvorrichtung angeordnet ist, bei deren Betätigung eine auf dieser Seite der Bremsscheibe befindliche Bremsbacke gegen diese gedrückt wird, worauf sich der Bremssattel aufgrund der Reaktionskräfte in Gegenrichtung verschiebt und dadurch eine auf der gegenüberliegenden Seite befindliche Bremsbacke gleichfalls an die Bremsscheibe andrückt.

Die Zuspannvorrichtung weist bei dieser bekannten Scheibenbremse als Betätigungsorgan einen Drehhebel auf, der um eine zur Ebene der Bremsscheibe parallel verlaufende Drehachse schwenkbar gelagert ist und in üblicher Weise, z.B. mechanisch oder pneumatisch, betätigt werden kann. Der Drehhebel liegt hierbei auf seiner der Bremsscheibe zugewandten Seite mittels eines Exzenters etwa längsmittig an einer sich parallel zur Drehachse erstreckenden Traverse an, die bezüglich der Bremsscheibe verschiebbar geführt ist und in der mindestens eine ein Außengewinde aufweisende Stellspindel in einem jeweils zugeordneten Innengewinde der Traverse verstellbar verschraubt ist, wobei die Stellspindel über ein an ihrem bremsscheibenseitigen Ende sitzendes Druckstück auf die zuspannseitig im Bremssattel bezüglich der Bremsscheibe verschiebbar gelagerte Bremsbacke einwirkt. Ferner ist eine Nachstelleinrichtung vorgesehen, die drehfest mit der Stellspindel gekoppelt ist und bei jeder Betätigung des Drehhebels vermittels einer Rutschkupplung bewirkt, daß das sich infolge Belagverschleiß ändernde Lüftspiel seinen korrekten Sollwert konstant beibehält.

Um die Stellspindel bei Bedarf problemlos, d.h. ohne vollständige Demontage des Bremssattels austauschen zu können, ist es zweckmäßig, das Druckstück nicht einstückig mit der Stellspindel auszubilden, sondern mittels einer geeigneten Befestigungsvorrichtung an letzterer demontierbar zu befestigen. Darüber hinaus wird die Durchgangsöffnung jeder Stellspindel meist mittels eines Faltenbalgs abgedichtet, der zweckmäßig am jeweiligen Druckstück befestigt wird. Somit muß das Druckstück gegenüber der Stellspindel drehbar gelagert werden, um eine sichere Nachstellfunktion zu gewährleisten.

Im Hinblick auf die Minimierung des Umfangsschrägverschleißes sowie des Radialschrägverschleißes kommt einer sicheren und ausreichend stabilen Befestigung, die gleichwohl eine freie Drehbarkeit erlaubt, in diesem Zusammenhang eine große Bedeutung zu. Andererseits sollte die drehbare Befestigung aber auch dergestalt sein, daß einerseits eine einfache und schnelle Montage und Demontage möglich ist und andererseits die Herstellungskosten der Scheibenbremse hierdurch so wenig wie möglich erhöht werden.

Der Erfindung liegt die Aufgabe zugrunde, eine druckluftbetätigte Scheibenbremse gemäß dem Oberbegriff des Anspruchs 1 derart weiterzubilden, daß eine leicht handhabbare und gleichzeitig stabile Befestigung des Druckstücks an der Drehspindel bei möglichst geringen Herstellungskosten erzielbar sind. Durch eine sichere Führung des Druckstückes an der Drehspindel soll außerdem der Schrägverschleiß beim Bremsen weiter vermindert werden.

Diese Aufgabe wird erfindungsgemäß mit der im Kennzeichnungsteil des Anspruchs 1 angegebenen Maßnahmen gelöst.

Erfindungsgemäß ist demzufolge die dem Druckstück zugewandte Stirnseite der Stellspindel als geschlossene Fläche ausgebildet und weist einen Lagerzapfen auf, der mit einer in dem Druckstück ausgebildeten Ausnehmung in Eingriff bringbar ist. Die auf diese Weise gebildete Befestigungsvorrichtung zeichnet sich nicht nur durch eine sehr einfache Handhabung, d.h. durch äußerst leichte Montage und Demontage des Druckstücks, sondern insbesondere auch dadurch aus, daß die Stellspindel preisgünstig mittels eines Fließpressverfahrens hergestellt werden kann, bei dem trotz hoher Präzision nur geringe Herstellungskosten auftreten. Ausführliche Untersuchungen haben außerdem gezeigt, daß eine derartige Befestigungsvorrichtung einen ausreichend stabilen Halt bietet, um den Schrägverschleiß gering zu halten. Darüber hinaus gestaltet sich die Herstellung der für die Nachstellbewegung der Stellspindeln erforderliche Axial-Innenverzahnung mit anderen Herstellungsverfahren wesentlich aufwendiger, so daß die Erfindung auch im Hinblick hierauf sehr vorteilhaft ist. Ein weiterer Vorteil der Erfindung liegt darin, daß über das untere Ende der Stellspindel keinerlei Schmutz oder Feuchtigkeit in das Innere der Zuspannvorrichtung eindringen kann, so daß ein hervorragender Schutz gegen Korrosion gegeben ist.

Der Schrägverschleiß kann noch weiter verringert werden, indem die dem Druckstück zugewandte, geschlossene Stirnseite der Stellspindel mit einer Außenkonus-Ringfläche versehen wird, die mit einer entsprechenden Innenkonus-Ringfläche des Druckstücks in Eingriff bringbar ist. Durch diese Maßnahme wird die Stützbreite der Stellspindel so weit vergrößert, daß Kippmomente im wesentlichen vollständig aufgefangen werden, so daß das Druckstück entsprechend sicher gelagert ist und die Bremsbacke noch gleichmäßiger abstützt. Gemäß Anspruch 2 empfiehlt es sich in diesem Zusammenhang, die Winkelneigung der Außenkonus-Ringfläche so zu wählen, daß ihre nach außen gerichtete Projektionsebene den Außenumfang der mit der Bremsbacke in Berührung bringbaren Fläche des Druckstücks im wesentlichen vollständig einschließt; hierdurch ist eine optimale Kraftverteilung gewährleistet.

Eine andere Weiterbildung der Erfindung liegt gemäß Anspruch 3 darin, zwischen den konischen Ringflächen und dem Zapfen bzw. der Ausnehmung des Druckstücks eine basisparallele Ringfläche vorzusehen, wodurch erreicht wird, daß das Profil der Stellspindel am Zapfen durch den Konus nicht mehr als nötig geschwächt wird.

Um zu erreichen, daß das Druckstück beim Entfernen der Bremsbacken nicht vom Zapfen abgleitet, empfiehlt es sich gemäß Anspruch 4 schließlich, das Druckstück mittels einer zwischen dem Zapfen und der Ausnehmung angeordneten Klemmeinrichtung an der Stellspindel klemmbar zu befestigen, wobei die Klemmung selbstverständlich nur so stark sein sollte, daß selbst bei Korrosion oder Verschmutzung weiterhin eine ausreichend leichte Drehbarkeit des Druckstücks gewährleistet ist.

Die Erfindung wird nachstehend anhand der Beschreibung von Ausführungsbeispielen unter Bezugnahme auf die Zeichnung näher erläutert. Es zeigen:
Fig. 1 anhand eines Querschnitts den schematischen Aufbau der Zuspannvorrichtung;
Fig. 2 einen Längsschnitt der in Fig. 1 gezeigten Zuspannvorrichtung; und
Fig. 3 eine Ausführungsform der Stellspindel und des daran befestigten Druckstücks.

Um die der Erfindung zugrundeliegende Problematik zu verdeutlichen, sollen zunächst der prinzipielle Aufbau und die Wirkungsweise der gattungsgemäßen Scheibenbremse und deren Zuspannvorrichtung näher erläutert werden. Obgleich die gezeigte Ausführungsform der Zuspannvorrichtung zwei Spindeln aufweist, sei darauf hingewiesen, daß die Erfindung selbstverständlich auch bei einer einspindeligen Zuspannvorrichtung verwendbar ist.

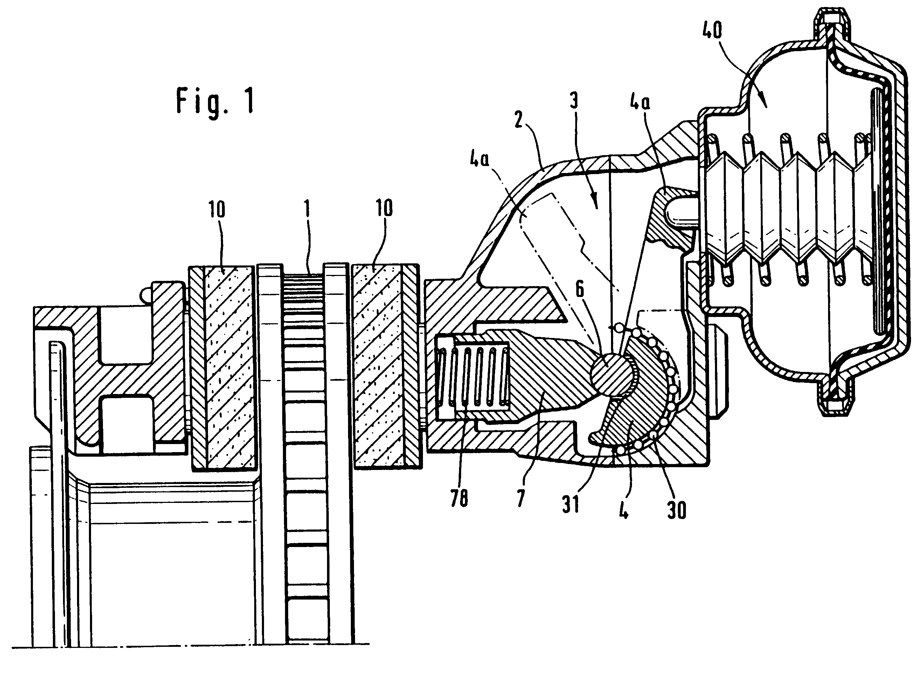

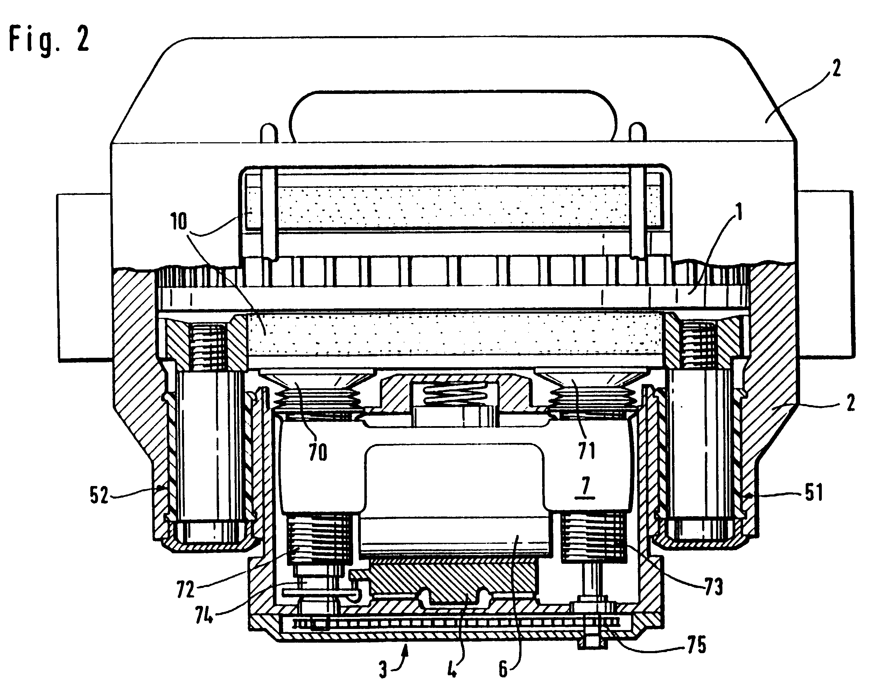

Wie aus den Figuren 1 und 2 zu erkennen ist, wird eine (innenbelüftete) Bremsscheibe 1, die an einer nicht näher bezeichneten Achse eines Nutzfahrzeugs befestigt ist, von einem Bremssattel 2 umfaßt. Der Bremssattel 2 ist gemäß Fig. 2 mittels eines starren Führungslagers 52 sowie mittels eines Ausgleichslagers 51 in axialer Verschiebbarkeit bezüglich der Bremsscheibe 1 am Fahrzeug gelagert. Im übrigen sind Aufbau und Funktion des Bremssattels bekannt, so daß sich eine nähere Erläuterung erübrigt.

Auf der in Fig. 1 rechten bzw. der in Fig. 2 unteren Seite der Bremsscheibe 1 ist eine schematisch mit dem Bezugszeichen 3 bezeichnete (zweispindelige) Zuspannvorrichtung angeordnet. Im Bremssattel 2 ist ein im wesentlichen halbkreisförmiges Drehlager 30 vorgesehen, dessen Drehachse parallel zur Ebene der Bremsscheibe 1 verläuft und das den entsprechend abgerundeten Bereich eines Drehhebels 4 aufnimmt, so daß der Drehhebel 4 parallel zur Ebene der Bremsscheibe 1 verschwenkt werden kann. Zur Betätigung des Drehhebels 4 ist ein lediglich schematisch dargestellter Bremszylinder 40 vorgesehen, der mit einem Kolben in eine geeignet geformte Ausnehmung eines Betätigungsarms 4a des Drehhebels 4 eingreift. Wenn der Bremszylinder 40 mit der Druckluft beaufschlagt wird, wird der Betätigungsarm 4a des Drehhebels 4 folglich von seiner Ruheposition in die in Fig. 1 in gestrichelter Darstellung angedeutete Position bewegt. Es sei angemerkt, daß die Betätigung des Drehhebels 4 selbstverständlich auch über ein Bremsgestänge erfolgen kann, so daß der Bremszylinder 40 gegebenenfalls an einem anderen Ort plaziert werden kann, falls der Einbauraum für die Scheibenbremse bzw. deren Zuspannvorrichtung begrenzt ist.

Die dem halbschalenförmigen Drehlager 30 abgewandte Seite des Drehhebels 4 ist über einen als Nocken dienenden Exzenter 6 mit einer Traverse 7 gekoppelt, die sich innerhalb des Bremssattels 2 im wesentlichen parallel zur Drehachse der Bremsscheibe 1 erstreckt und in dieser Ebene verschiebbar gelagert ist. An ihrem der Bremsscheibe 1 zugewandten Ende weist die Traverse 7 eine sacklochartige Ausnehmung auf, die von einem in Richtung zur Bremsscheibe 1 auskragenden, rohrartigen Ansatz umgeben ist. Dieser Ansatz der Traverse 7 ist in einer entsprechenden Ausnehmung des Bremssattels 2 rechtwinklig zur Ebene der Bremsscheibe 1 unter Beibehaltung eines derartigen Spiels schiebegelagert, daß die Traverse 7 geringfügige Schwenkbewegungen in der Zeichnungsebene ausführen kann. Innerhalb der Ausnehmung ist eine Spiralfeder 78 angeordnet, die zwischen die Traverse 7 und das der Bremsscheibe 1 zugewandte Ende des Bremssattels 2 eingespannt ist und dadurch die Traverse 7 zum Drehhebel 4 hin vorspannt.

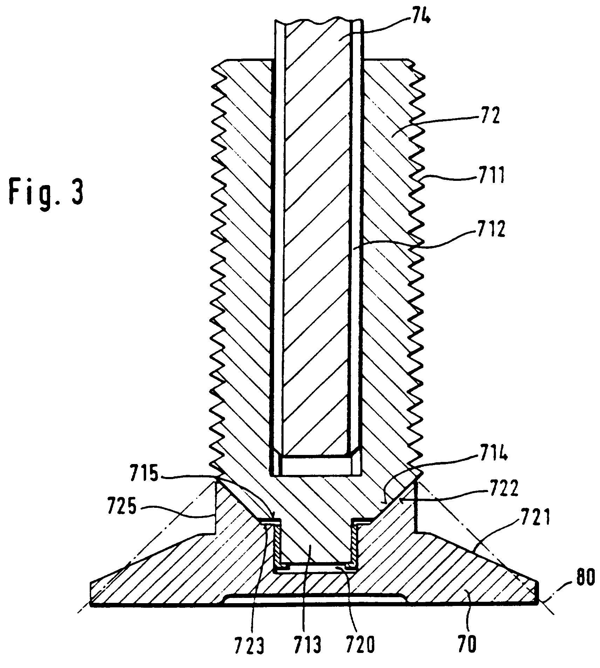

Wie insbesondere dem Längsschnitt der Fig. 2 entnehmbar ist, weist die Traverse 7 an beiden Seiten jeweils eine mit einem Innengewinde versehene Bohrung auf, in der jeweils eine Stellspindel 72 bzw. 73 justierbar verschraubt ist, deren in Fig.3 mit 711 bezeichnetes Außengewinde in einem entsprechend geformten Innengewinde der Traverse 7 geführt ist. An dem der Bremsscheibe 1 zugewandten Ende jeder der Stellspindeln 72 und 73 ist ein sich kegelförmig verbreiterndes Druckstück 70 bzw. 71 befestigt. Da sich die beiden Stellspindeln 72 und 73 infolge ihrer Anordnung in der Traverse 7 senkrecht zur Ebene der Bremsscheibe 1 erstrecken, liegen die Druckstücke 70 und 71 mit ihren flachen Enden an einer Bremsbacke 10 an. Die Bremsbacke 10 ist insbesondere in Umfangsrichtung zur Bremsscheibe 1 über nicht gezeigte Halterungen quer zur Bremsscheibe 1 verschiebbar geführt, wobei die Halterungen entweder dem Bremssattel 2 oder einem Bremsträger zugeordnet sein können.

Im Inneren der Stellspindel 72 ist eine Nachstelleinrichtung 74 angeordnet, die infolge einer Axialverzahnung drehfest mit der Stellspindel 72 gekoppelt und in axialer Richtung verschiebbar ist. Die Nachstelleinrichtung 74 wird bei jeder Betätigung des Drehhebels 4 um einen bestimmten Winkelbetrag gedreht, wodurch ein kontinuierliches Nachstellen der Bremse gewährleistet ist. In eine entsprechende Axialverzahnung der gegenüberliegenden Stellspindel 73 greift ein Zahnrad ein, das über eine Welle mit einer Synchronisationseinrichtung 75 gekoppelt ist, die das innenliegende Zahnrad und damit die Spindel 73 synchron mit der Nachstelleinrichtung 74 dreht. Hierdurch wird erreicht, daß das Druckstück 71 synchron mit dem Druckstück 70 nachgestellt wird.

Bei einer einspindeligen Ausführungsform der Traverse 7, die demzufolge lediglich eine einzige Stellspindel und damit nur ein Druckstück aufweist, wird die Stellspindel beispielsweise in der Mitte der Traverse 7 angeordnet, während der Exzenter 6 sowie die die Druckfeder aufweisende Lagerung der Traverse 7 jeweils in zweifacher Ausfertigung auf beiden Seiten der zentralen Stellspindel vorgesehen sind.

Nachfolgend wird das Arbeitsprinzip der erfindungsgemäßen Zuspanneinrichtung kurz erläutert. Bei Druckluftbeaufschlagung des Bremszylinders 40 wird der Betätigungsarm 4a gemäß Fig. 1 nach links verschwenkt, wodurch der am Drehhebel 4 wirkende Exzenter 6 um eine entsprechend den Hebelgesetzen verringerte Strecke gleichfalls nach links verschoben wird. Die Traverse 7 wird daher entgegen der Vorspannkraft der Spiralfeder 78 um diese Wegstrecke zur Bremsscheibe 1 hin gedrückt. Die an der Traverse 7 über die Stellspindeln 72 und 73 befestigten Druckstücke 70 bzw. 71 drücken folglich unter Überwindung des Lüftspiels (das in der Praxis ca. 0,4 mm beträgt) die Bremsbacke 10 gegen die Bremsscheibe 1. Wenn der Betätigungsarm 4a weiter nach links verschwenkt wird, verschiebt sich der Bremssattel aufgrund der auf die Bremsscheibe 1 ausgeübten Kraft in Fig. 1 nach rechts, so daß schließlich auch die linke Bremsbacke 10 gegen die Bremsscheibe 1 gepreßt wird. Da das Außengewinde der Stellspindeln 72 und 74 und das jeweils zugeordnete Innengewinde der Traverse 7 so dimensioniert sind, daß im druckbeaufschlagten Zustand entgegen der Zuspannrichtung eine Selbsthemmung auftritt, können sich die Stellspindeln nicht in diese Richtung wegbewegen, so daß der Bremsdruck solange aufrechterhalten bleibt, bis der Drehhebel 4 freigegeben wird.

Wenn die beiden Bremsbacken 10 im Verlauf des vorstehend erläuterten Zuspannvorgangs um eine vorbestimmte, einem Soll-Lüftspiel entsprechende Strecke verschoben worden sind, wird die Nachstelleinrichtung 74 vom Drehhebel 4 betätigt. Sofern das Lüftspiel korrekt eingestellt ist, liegen beide Bremsbacken 10 zu diesem Zeitpunkt an der Bremsscheibe 1 an. Infolgedessen spricht eine in der Nachstelleinrichtung 74 vorgesehene Rutschkupplung an, so daß die Stellspindel 72 und die mit ihr synchronisierte Stellspindel 73 nicht verstellt werden. Wenn demgegenüber ein zu großes Lüftspiel vorliegt, was beispielsweise nach einem Belagwechsel oder bei zunehmendem Verschleiß der Bremsbacken der Fall ist, werden die Stellspindeln 72 und 73 von der Nachstelleinrichtung 74 um eine bestimmte Strecke gedreht und bringen dadurch das Lüftspiel, gegebenenfalls nach mehrmaliger Betätigung der Bremse, auf den Sollwert. Auf diese Weise ist gewährleistet, daß die erfindungsgemäße Scheibenbremse bis zum vollständigen Abrieb der Bremsbacken 10 funktionsfähig bleibt; dies ist jedoch, wie eingangs erläutert, nur dann der Fall, wenn der Gleitreibungsbeiwert des Gewindes so gering ist, daß die Rutschkupplung nicht zuvor anspricht.

Die Fig.3 zeigt eine Ausführungsform der Stellspindel 72, die erfindungsgemäß vorzugsweise mittels eines Fließpressverfahrens hergestellt ist; unter Verwendung eines derartigen Herstellungsverfahrens ist es sehr leicht möglich, die dem Druckstück 70 zugewandte Stirnseite der Stellspindel 70 als geschlossene Wandung auszuführen, von der ein Lagerzapfen 713 hervorragt, der im wesentlichen zylindrisch ausgebildet ist und mit einer in dem Druckstück 70 ausgebildeten Ausnehmung 720 in Eingriff gebracht werden kann. Zur Vergrößerung der Stützbreite der Stellspindel 72 und damit zur Verringerung des Schrägverschleißes ist das Druckstück 70 über konusförmige Stützflächen 714 bzw. 722 mit der Stellspindel 72 gekoppelt ist; da der Lagerzapfen 713 darüber hinaus unter Zwischenschaltung einer federförmigen Klemmeinrichtung, die in der Figur lediglich schematisch angedeutet ist, in eine zugeordnete Ausnehmung 720 des Druckstücks 70 eingreift, kann das Druckstück trotz seiner weitgehend spielfreien Lagerung sehr einfach montiert und demontiert werden. Darüber hinaus ist die erforderliche freie Drehbarkeit des Druckstücks an der Stellspindel gewährleistet.

## Patentansprüche

1. Druckluftbetätigte Scheibenbremse mit einem eine Bremsscheibe *(1)* umfassenden Bremssattel *(2),* auf dessen einer Seite eine Zuspannvorrichtung *(3)* mit einem schwenkbar gelagerten Drehhebel *(4, 4a)* angeordnet ist, der mittels eines Exzenters *(6)* an einer sich parallel zur Drehachse *(25)* erstreckenden Traverse *(7)* anliegt, die bezüglich der Bremsscheibe *(1)* verschiebbar geführt ist und in der mindestens eine mit einem Außengewinde *(711)* versehene Stellspindel *(72, 73)* verstellbar verschraubt ist, die über ein an ihrem bremsscheibenseitigen Ende sitzendes Druckstück *(70, 71)* auf eine zuspannseitig im Bremssattel *(2)* bezüglich der Bremsscheibe *(1)* verschiebbar gelagerte Bremsbacke *(10)* einwirkt,
***dadurch gekennzeichnet,***
daß die dem Druckstück *(70, 71)* zugewandte Stirnseite der Stellspindel *(72, 73)* geschlossen ausgebildet ist und einen Lagerzapfen *(713)* aufweist, der mit einer in dem Druckstück *(70, 71)* ausgebildeten Ausnehmung *(720)* in Eingriff bringbar ist, und daß die dem Druckstück *(70, 71)* zugewandte Stirnseite der Stellspindel *(72, 73)* eine Außenkonus-Ringfläche *(714)* aufweist, die mit einer entsprechenden Innenkonus-Ringfläche *(722)* des Druckstücks *(70, 71)* in Eingriff bringbar ist, wobei das Druckstück *(70, 71)* zur kippfreien Führung der Bremsbacke *(10)* ausschließlich durch den Lagerzapfen *(713)* und die Ringfläche *(714)* geführt ist.

2. Druckluftbetätigte Scheibenbremse nach Anspruch 1, ***dadurch gekennzeichnet,*** daß die Winkelneigung der Außenkonus-Ringfläche *(714)* so gewählt ist, daß ihre nach außen gerichtete Projektionsebene *(80)* den Außenumfang der mit der Bremsbacke *(10)* in Berührung bringbaren Fläche des Druckstücks *(70, 71)* im wesentlichen vollständig einschließt.

3. Druckluftbetätigte Scheibenbremse nach Anspruch 1 oder 2*,* ***dadurch gekennzeichnet,*** daß zwischen den konischen Ringflächen *(715, 722)* und dem Zapfen *(713)* bzw. der Ausnehmung *(720)* des Druckstücks *(70, 71)* eine basisparallele Ringfläche *(715, 723)* vorgesehen ist.

4. Druckluftbetätigte Scheibenbremse nach einem der Ansprüche 1 bis 3, ***dadurch gekennzeichnet,*** daß das Druckstück *(70, 71)* mittels einer zwischen dem Zapfen *(713)* und der Ausnehmung *(720)* angeordneten Klemmeinrichtung an der Stellspindel *(72,* 73) festklemmbar ist.

5. Druckluftbetätigte Scheibenbremse nach Anspruch 4, ***dadurch gekennzeichnet,*** daß der Zapfen *(713)* an seinem Ende eine Aufweitung aufweist.

6. Druckluftbetätigte Scheibenbremse nach Anspruch 4 oder 5*,* ***dadurch gekennzeichnet,*** daß die Klemmwirkung so bemessen ist, daß eine freie Drehbarkeit des Druckstücks *(70, 71)* auch bei Auftreten von Rost gewährleistet ist.

7. Druckluftbetätigte Scheibenbremse nach einem der Ansprüche 1 bis 6, ***dadurch gekennzeichnet,*** daß die Stellspindel *(72, 73)* mittels eines Fließpressverfahrens hergestellt ist.

## Claims

1. Compressed-air actuated disk brake comprising a caliper *(2)* which reaches around a brake disk *(1)* and on one side of which an application device *(3)* is arranged which has a pivotally mounted pivoting lever *(4, 4a)* which, by means of an eccentric *(6)*, rests against a traverse *(7)* which extends in parallel to the axis of rotation *(25)* and is guided to be displaceable with respect to said brake disk *(1)* and has at least one actuating spindle *(72, 73)* comprising an external thread *(711)* adjustably screwed into it, said actuating spindle *(72, 73)*, by way of at least one pressure member *(70, 71)* mounted on the end thereof facing the brake disk, acting upon a brake pad *(10)* which, on the application side, is disposed in said caliper *(2)* to be displaceable with respect to said brake disk *(1)*,
*characterized in that*
the end face of said actuating spindle *(72, 73)* which faces said pressure member *(70, 71)* is closed and comprises a journal *(713)* which can be engaged with a recess *(720)* formed in said pressure member *(70, 71),* and that the end face of said actuating spindle *(72, 73)* facing said pressure member *(70, 71)* comprises an outer conical annular surface *(714)* which can be engaged with a corresponding inner conical annular surface *(722)* of said pressure member *(70, 71),* said pressure member *(70, 71)* being guided to guide said brake pad *(10)* without tilting exclusively by way of said journal *(713)* and of said annular surface *(714).*

2. Compressed-air actuated disk brake according to claim 1, *characterized in that* the angle of inclination of said outer conical annular surface *(714)* is selected such that its plane of projection *(80)* directed towards the outside encompasses essentially all of the outer circumference of that area of said pressure member *(70, 71)* which can be made to contact said brake pad *(10).*

3. Compressed-air actuated disk brake according to claim 1 or 2, ***characterized in that*** an annular surface *(715, 723)* is provided in parallel to the base between said conical annular surfaces *(715, 722)* and said journal *(713)* or said recess *(720)* of said pressure member *(70, 71),* respectively.

4. Compressed-air actuated disk brake according to one of claims 1 to 3, ***characterized in that*** said pressure member *(70, 71)* can be clamped to said actuating spindle *(72,* 73) by means of clamping means arranged between said journal *(713)* and said recess *(720).*

5. Compressed-air actuated disk brake according to claim 4, ***characterized in that*** said journal *(713)* comprises a flaring portion at its end.

6. Compressed-air actuated disk brake according to claim 4 or 5, ***characterized in that*** the clamping effect is adjusted such that free rotatability of said pressure member *(70, 71)* is ensured even in the presence of rust.

7. Compressed-air actuated disk brake according to one of claims 1 to 6, ***characterized in that*** said actuating spindle *(72, 73)* is manufactured by means of an extrusion process.

## Revendications

1. Frein à disque à air comprimé comportant un étrier de frein (2) cernant un disque de frein (1), sur l'un côté duquel un dispositif de serrage (3) est disposé avec un levier pivotant (4, 4a) logé de manière à pouvoir pivoter, qui moyennant un excentrique (6) repose contre une traverse (7) qui s'étend parallèlement à l'axe de rotation (25), laquelle traverse est guidée de manière à pouvoir se déplacer par rapport au disque de frein (1) et dans laquelle au moins une vis de réglage (72, 73) pourvue d'un filet extérieur (711) est vissée de manière à pouvoir être réglée, qui agit moyennant une pièce de pression (70, 71) logée sur son extrémité côté disque de frein sur une mâchoire de frein (10) logée dans l'étrier de frein (2) côté dispositif de serrage de manière à pouvoir être déplacée par rapport au disque de frein (1),
caractérisé en ce que
la face frontale dirigée vers la pièce de pression (70, 71) de la vis de réglage (72, 73) est formée de manière fermée et présente un pivot de palier (713) qui peut être amené en prise avec une échancrure (720) formée dans la pièce de pression (70, 71) et que la face frontale de la vis de réglage (72, 73) dirigée vers la pièce de pression (70, 71) présente une surface annulaire à conicité extérieure (714) qui peut être amenée en prise avec une surface annulaire à conicité intérieure (722) correspondante de la pièce de pression (70, 71), la pièce de pression (70, 71) étant guidée exclusivement par le pivot de palier (713) et la surface annulaire (714) en vue d'un guidage sans basculement de la mâchoire de frein (10).

2. Frein à disque à air comprimé selon la revendication 1, caractérisé en ce que l'angle d'inclinaison de la surface annulaire à conicité extérieure (714) est choisi de manière à ce que son plan de projection dirigé vers l'extérieur (80) entoure substantiellement la circonférence intégrale extérieure de la surface de la pièce de pression (70, 71) qui peut être amenée en contact avec la mâchoire de frein (10).

3. Frein à disque à air comprimé selon les revendications 1 ou 2, caractérisé en ce qu'entre les surfaces annulaires coniques (715, 722) et le pivot (713) ou l'échancrure (720) de la pièce de pression (70, 71) une surface annulaire (750, 723) à base parallèle est prévue.

4. Frein à disque à air comprimé selon l'une quelconque des revendications 1 à 3, caractérisé en ce que la pièce de pression (70, 71) peut être serrée fermement sur la vis de réglage (72, 73) moyennant un dispositif de serrage disposé entre le pivot (713) et l'échancrure (720).

5. Frein à disque à air comprimé selon la revendication 4, caractérisé en ce que le pivot (713) présente un élargissement à son extrémité.

6. Frein à disque à air comprimé selon les revendications 4 ou 5, caractérisé en ce que l'effet de serrage est mesuré de manière à garantir même en présence de rouille un pivotement libre de la pièce de pression (70, 71).

7. Frein à disque à air comprimé selon l'une quelconque des revendications 1 à 6, caractérisé en ce que la vis de réglage (72, 73) est fabriquée au moyen d'un procédé d'extrusion.
